# EUROPEAN PATENT APPLICATION

(11) **EP 2 140 996 A1**
(43) Date of publication of application: **06.01.2010**
(21) Application number: 09164396.5
(22) Date of filing: 02.07.2009
(51) Int. Cl.: B29C 45/73

(54) **Mold multiple heating and cooling system**

(30) Priority: 03.07.2008 JP 2008174443
(71) Applicant: Sysko Corporation, Tokyo 130-0003 (JP)
(72) Inventor: Shimoda, Toshio, Tokyo 130-0003 (JP); Furukawa, Toshifumi, Tokyo 130-0003 (JP); Otaki, Yasuhisa, Tokyo 130-0003 (JP)
(74) Representative: Murgatroyd, Susan Elizabeth

(57) **Abstract**

The present invention provides a mold multiple heating and cooling system which, for a plurality of molding machines (8a,8b), allows a single temperature control apparatus to be used to selectively supply steam or warm water, or cooling water for carrying out molding, and eliminates the need for separately installing a venting apparatus. The mold heating and cooling system pertaining to the present embodiment 1 includes a steam heating unit (30), a warm water heating unit (35), and a cooling unit (40) which feed steam, warm water, and cooling water, respectively, to molds (1 to 4) for two molding machines (8a,8b) that include an in-mold temperature sensor TC1 to TC4, respectively. A single temperature control apparatus (10) is disposed between the units and the respective molds (1 to 4) of the two molding machines (8a,8b), connected by a piping therebetween. Control means (50) which, on the basis of a temperature detected by each in-mold temperature sensor (TC1 to TC4) disposed in the respective molds (1 to 4), determines the temperature of the respective molds (1 to 4) on a previously stored temperature determination program for controlling selective supply and discharge of steam or warm water, or cooling water to/from the respective molds (1 to 4) of the two molding machines (8a,8b) according to a molding cycle for each molded article therefor. A mold vacuum system (80) carries out sucking and discharging of the gas and air inside the respective molds (1 to 4), and air blowing for the respective molds under the control of the control means (50).

## Description

The present invention relates to a mold multiple heating and cooling system which, for a plurality of molding machines, allows a single temperature control apparatus to be used to selectively supply steam or warm water, or cooling water for carrying out molding, and eliminates the need for separately installing a venting apparatus.

Conventionally, there have been proposed a variety of mold heating and cooling systems which use a temperature control apparatus to feed steam or warm water, or cooling water to a mold of a molding machine, such as an injection molding machine or a thermal press, and repeats a cycle consisting of heating the mold, molding of a molded article, and cooling the mold.

However, in the real state of affairs, there is available no heating and cooling system which is configured such that, for a plurality of molding machines or a dual-material molding machine, a single temperature control apparatus can be used to selectively supply steam or warm water, or cooling water for obtaining a molded article. In other words, a heating and cooling system for use with a plurality of molding machines or a dual-material molding machine has not yet been established.

In addition, in molding a molded article by heating and cooling of a mold, the temperature of the mold is extremely raised. Thus there arises a problem that the gas and air emitted from the resin filled in the mold can cause a molded article to have such a defect as gas corrosion, fogging, short shot, or the like, and conventionally to solve this problem, a venting apparatus must have been installed separately from the molding machine to remove the gas and air.

In the patent literature 1, a mold heating and cooling system is proposed which includes a heating unit, a cooling unit, a fluid circulation line for heating, a fluid circulation line for cooling, a fluid for heating, a selector valve for cooling fluid, a sensor for detecting mold temperature, a heating fluid, a fluid line selecting section which carries out control of cooling fluid selection, and carries out mold heating and cooling for obtaining a molded article.

This patent literature 1 discloses an invention mainly involving a single mold for producing a molded article, giving no art for molding using a plurality of molding machines or a dual-material molding machine.
Patent Document 1 Japanese Patent Laid-Open Publication No. 2008-023841

The problem to be solved by the invention is that there is not available any heating and cooling system which, for a plurality of molding machines or a dual-material molding machine, allows a single temperature control apparatus to be used to selectively supply steam or warm water, or cooling water for individually obtaining a molded article. It may also eliminate the need for separately installing a venting apparatus.

As a most important feature of the present invention, it provides a mold multiple heating and cooling system which selectively supplies steam or warm water, or cooling water to respective molds of a plurality of molding machines that include an in-mold temperature sensor, respectively, and repeats a cycle consisting of heating the respective molds, molding a molded article for each of the plurality of molding machines, and cooling the respective molds, including a steam heating unit which generates steam; a warm water heating unit which generates warm water; a cooling unit which supplies and circulates cooling water; a single temperature control apparatus which is disposed between said steam heating unit, warm water heating unit and cooling unit and the respective molds of the plurality of molding machines, being connected by a piping therebetween, which selectively supplies steam or warm water, or cooling water to said respective molds, and which includes a pipe line system capable of discharging from the respective molds; and control means which, on the basis of a temperature detected by each in-mold temperature sensor disposed in said respective molds, determines the temperature of the respective molds on a previously stored temperature determination program for controlling selective supply and discharge of steam or warm water, or cooling water to/from the respective molds of the plurality of molding machines according to a molding cycle for each molded article therefor.

According to a first aspect of the present invention as stated in the claim 1, there is provided a mold multiple heating and cooling system with which, for a plurality of molding machines, a single temperature control apparatus can be used to selectively supply steam or warm water, or cooling water for individually obtaining a molded article, and there is no need for repeating the working of connection between the steam heating unit, warm water heating unit, cooling unit and the temperature control apparatus for each of the plurality of molding machines, whereby the installation space requirement for the entire system can be substantially reduced.

According to a second aspect of the present invention as stated in the claim 2, there is provided a mold multiple heating and cooling system which gives the same advantages as given by the first aspect of the present invention as stated in the claim 1, and includes an in-mold cleaning apparatus, thereby eliminating the need for separately installing a venting apparatus.

According to a third aspect of the present invention as stated in the claim 3, there is provided a mold multiple heating and cooling system with which, for two molding machines having a total of four molds, a single temperature control apparatus can be used to selectively supply steam or warm water, or cooling water for individually obtaining a molded article; there is no need for repeating the working of connection between the steam heating unit, warm water heating unit, cooling unit and the temperature control apparatus for each of the plurality of molding machines, whereby the installation space requirement for the entire system can be substantially reduced; and further an in-mold cleaning apparatus is included, whereby the need for separately installing a venting apparatus is eliminated.

According to a fourth aspect of the present invention as stated in the claim 4, there is provided a mold multiple heating and cooling system which, being configured to include a mold-inversion type dual-material molding machine, allows a single temperature control apparatus to be used to selectively supply steam or warm water, or cooling water for obtaining a thick molded article, or the like, and eliminates the need for repeating the working of connection between the steam heating unit, warm water heating unit, cooling unit and the temperature control apparatus for each of the plurality of molding machines, whereby the installation space requirement for the entire system can be substantially reduced.

According to a fifth aspect of the present invention as stated in the claim 5, there is provided a mold multiple heating and cooling system which gives the same advantages as given by the fourth aspect of the present invention as stated in the claim 4, and includes an in-mold cleaning apparatus, thereby eliminating the need for separately installing a venting apparatus.

It is an object of the present invention to provide a heating and cooling system which, for a plurality of molding machines or a dual-material molding machine, allows a single temperature control apparatus to be used to selectively supply steam or warm water, or cooling water for individually obtaining a molded article, and may also eliminate the need for separately installing a venting apparatus.

The present invention has achieved the above-mentioned object by providing a configuration which selectively supplies steam or warm water, or cooling water to respective molds of a plurality of molding machines that include an in-mold temperature sensor, respectively, and repeats a cycle consisting of heating the respective molds, molding a molded article for each of the plurality of molding machines, and cooling the respective molds, including a steam heating unit which generates steam; a warm water heating unit which generates warm water; a cooling unit which supplies and circulates cooling water; a single temperature control apparatus which is disposed between said steam heating unit, warm water heating unit and cooling unit and the respective molds of the plurality of molding machines, being connected by a piping therebetween, which selectively supplies steam or warm water, or cooling water to said respective molds, and which includes a pipe line system which is capable of discharging from the respective molds, being constituted by pipes, valves, and the like; control means which, on the basis of a temperature detected by each in-mold temperature sensor disposed in said respective molds, determines the temperature of the respective molds on a previously stored temperature determination program for controlling selective supply and discharge of steam or warm water, or cooling water to/from the respective molds of the plurality of molding machines according to a molding cycle for each molded article therefor; and an in-mold cleaning apparatus which, under the control of said control means, sucks and discharges the gas and air in said respective molds, and blows air for cleaning the inside of the respective molds.

Hereinbelow, mold multiple heating and cooling systems pertaining to embodiments of the present invention will be described in detail with reference to the drawings. In the drawings:-
Figure 1 is a pipe line system diagram illustrating the entire configuration of a mold multiple heating and cooling system pertaining to the embodiment 1 of the present invention;
Figure 2 is a schematic block diagram illustrating the control system of the mold multiple heating and cooling system pertaining to the present embodiment 1;
Figure 3 is an explanatory diagram illustrating the molding cycle of the mold multiple heating and cooling system pertaining to the present embodiment 1;
Figure 4 is an explanatory chart illustrating the open or closed state of the respective valves when steam or warm water is used in the mold multiple heating and cooling system pertaining to the present embodiment 1;
Figure 5 is a diagram illustrating the schematic configuration of the mold vacuum system in the mold multiple heating and cooling system pertaining to the present embodiment 1;
Figure 6 is an explanatory chart illustrating three different operation modes for the mold vacuum system in the mold multiple heating and cooling system pertaining to the present embodiment 1;
Figure 7 is a schematic drawing illustrating the configuration and operation of a dual-material molding machine in a mold multiple heating and cooling system pertaining to an embodiment 2 of the present invention;
Figure 8 is a schematic block diagram illustrating the control system of the mold multiple heating and cooling system pertaining to the present embodiment 2; and
Figure 9 is an explanatory chart illustrating the contents of a temperature determining program in the mold multiple heating and cooling system pertaining to the present embodiment 2.

### Embodiment 1

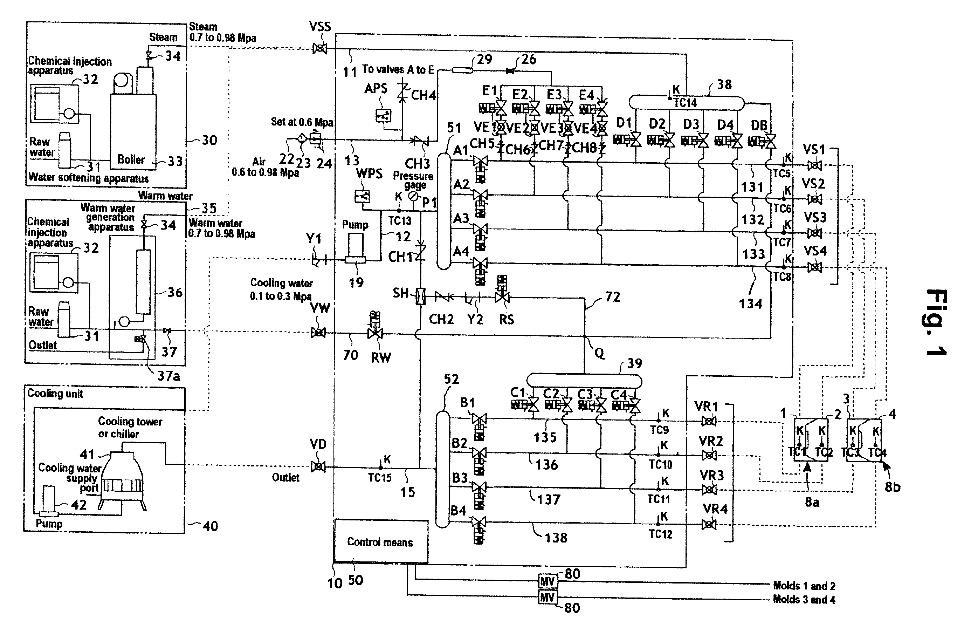

As shown in Figure 1, the mold heating and cooling system pertaining to the present embodiment 1 includes a temperature control apparatus 10 which carries out selectively supplying of steam or warm water as a medium for heating, or cooling water as a medium for cooling to a mold 1 and a mold 2 for a molding machine (A) 8a, and a mold 3 and a mold 4 for a molding machine (B) 8b which mold materials, such as resin for molding; a steam heating unit 30 which feeds steam into the temperature control apparatus 10; a warm water heating unit 35 which feeds warm water into the temperature control apparatus 10; a cooling unit 40 which circulates cooling water; and a mold vacuum system 80 of two-unit configuration that is connected to the temperature control apparatus 10, providing a mold inside cleaning apparatus configured to carry out such processes as vacuuming, bursting, and air blowing for the mold 1 and mold 2 and the mold 3 and mold 4 under the control of the temperature control apparatus 10.

The mold 1 and mold 2 for the molding machine (A) 8a, and the mold 3 and mold 4 for the molding machine (B) 8b include in-mold temperature sensors TC1 to TC4, respectively.

The steam heating unit 30 changes raw water into soft water with the use of a water softening apparatus 31, and further, using a chemical injection apparatus 32, injects a chemical, such as an antiseptic agent, or the like, into the soft water, before supplying it to a boiler 33 for changing it into steam. The boiler 33 for supplies it to an inlet steam valve VSS for the temperature control apparatus 10 from an outlet valve 34.

The warm water heating unit 35 changes raw water into soft water with the use of a water softening apparatus 31, and further, using a chemical injection apparatus 32, injects a chemical, such as an antiseptic agent, or the like, into the soft water, before supplying it to a warm water generation apparatus 36 to generate warm water. The warm water generation apparatus 36 supplies it to the inlet steam valve VSS for the temperature control apparatus 10 from an outlet valve 34.

In addition, the returning warm water from an outlet valve VW provided for the temperature control apparatus 10 is returned to the warm water heating unit 35 through a return valve 37 so as to be capable of discharging to the outside through an outlet valve 37a.

The cooling unit 40 introduces the cooling water supplied to the cooling water supply port into a cooling tower (or chiller) 41, and further, uses a pump 42 to supply the cooling water heat-exchanged by this cooling tower 41 to a Y-type strainer Y1 provided for the temperature control apparatus 10 through a cooling water outlet port.
In addition, the returning cooling water from an outlet valve VD provided for the temperature control apparatus 10 is caused to flow in from the cooling water return port to be scattered into the inside of the cooling tower 31 from the top thereof for performing heat-exchange.

The temperature control apparatus 10 includes a heating medium line 11, a cooling medium line 12, an air flow line 13, a warm water outlet medium line 70, an outlet medium line 15 for discharging circulation water (or steam) from the mold 1 to mold 4 toward a cooling unit 40, supply side pipe lines 131 to 134 having a four-line configuration, return side pipe lines 135 to 138 having a four-line configuration, and a control means 50 for carrying out control of this entire multiple heating and cooling system.

On the inlet side of the supply side pipe lines 131 to 134 having a four-line configuration, a cooling water reservoir 51, and cooling medium selector valves A1 to A4 are connected, and on the outlet side thereof (on the side of the molding machine (A) 8a and molding machine (B) 8b), supply medium temperature sensors TC5 to TC8 and supply valves VS1 to VS4 are connected.

The supply valves VS1 and VS2 are connected to the medium inlet of the mold 1 and mold 2 for the molding machine (A) 8a, respectively, while the supply valves VS3 and VS4 are connected to the medium inlet of the mold 3 and mold 4 for the molding machine (B) 8b, respectively.

On the inlet side (on the side of the molding machine (A) 8a and molding machine (B) 8b) of the return side pipe lines 135 to 138 having a four-line configuration, return valves VR1 to VR4 and return medium temperature sensors TC9 to TC12 are connected, respectively, while, on the outlet side (on the side of the cooling unit 40), outlet medium selector valves B1 to B4 and a cooling water outlet reservoir 52 are connected.

Said return valves VR1 and VR2 are connected to the medium outlet of the mold 1 and mold 2, respectively, while the return valves VR3 and VR4 are connected to the medium outlet of the mold 3 and mold 4, respectively.

In the heating medium line 11, the inlet steam valve VSS, a heating medium accumulator reservoir 38 provided with a heating medium temperature sensor TC 14, and heating medium selector valves D1 to D4 are disposed in this order, and the outlet side of these heating medium selector valves D1 to D4 are connected to the supply side pipe lines 131 to 134, respectively.

In the cooling medium line 12, the Y-type strainer Y1, the pump 19, a water pressure switch WPS, a cooling medium temperature sensor TC 13, and a pressure gage P1 are connected, and this cooling medium line 12 is connected to the cooling water reservoir 51.

In the air flow line 13, an air supply 22, an air filter 23, an air regulator 24, a check valve CH3, an air accumulator reservoir 29, and a regulating valve 26 are connected in this order. Further, air selector valves E1 to E4, air supply valves VE1 to VE4, and check valves CH5 to CH8 are connected, and further, the outlet sides of these check valves CH5 to CH8 are connected to the supply side pipe lines 131 to 134, respectively, for supplying compressed air.

In addition, in a pipe line branched off ahead of the check valve CH3, an air pressure switch APS and a check valve CH4 are connected for supplying air for valve control to the cooling medium selector valves A1 to A4, the outlet medium selector valves B1 to B4, the return medium selector valves C1 to C4, the heating medium selector valves D1 to D4, and the air selector valves E1 to E4.

The outlet medium line 15 is constituted by connecting the return medium temperature sensor TC15 and the outlet valve VD to the cooling water outlet reservoir 52 in this order, and connecting this outlet valve VD to the cooling tower 41.

The warm water outlet medium line 70 is constituted by connecting a warm water bypass valve DB, a warm water selector valve RW, and the outlet valve VW to the heating medium accumulator reservoir 38 in this order, and connecting this outlet valve VW to the return valve 37 in the warm water heating unit 35.

In between the cooling medium line 12 and the outlet medium line 15, a check valve CH1 and a silent reducer SH are connected in series.

In addition, to the return medium selector valves C1 to C4 connected to the return side pipe lines 135 to 138 having a four-line configuration, respectively, a return medium outlet tube 39 is connected, and this return medium outlet tube 39 is connected to a branch section Q between the warm water bypass valve DB and the warm water selector valve RW in the warm water outlet medium line 70.

Further, in a steam return pipe line 72 between the branch section Q and the silent reducer SH, a steam selector valve RS, a Y-type strainer Y2, and a check valve CH2 are connected.

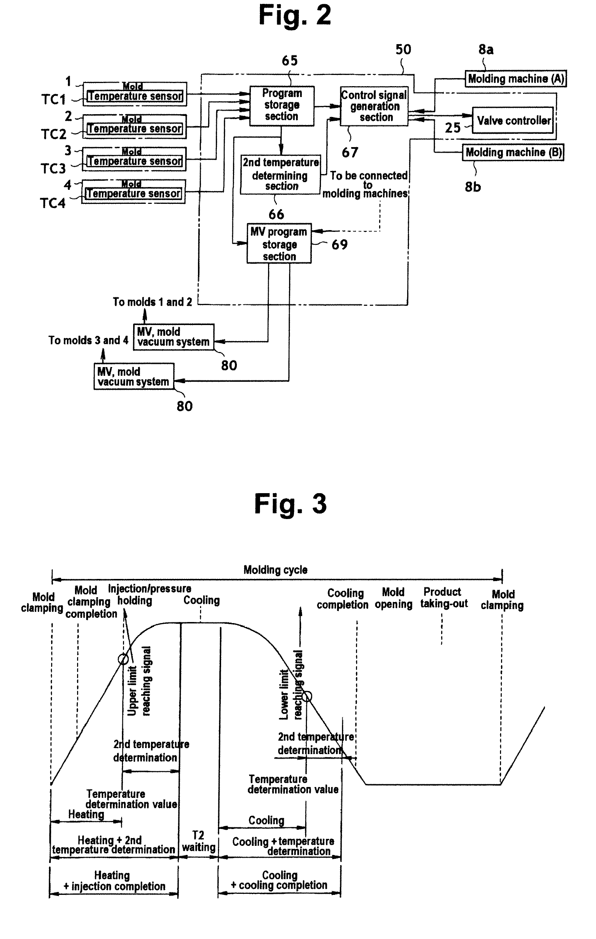

Next, the configuration of the control means 50 in the temperature control apparatus 10 will be described.
As shown in Figure 2, the control means 50 includes a program storage section 65 to which a detection temperature signal from the respective in-mold temperature sensors TC1 to TC4 disposed in the molding machine (A) 8a and molding machine (B) 8b is inputted, and in which a temperature determining program is stored; a second temperature determining section 66 in which a second temperature determining program is stored; an MV program storage section 69 in which an MV program for controlling two mold vacuum systems (MV) 80 is stored; a control signal generation section 67 which sends out a control signal to a valve controller 25, the molding machine (A) 8a, and the molding machine (B) 8b; and the valve controller 25 for carrying out open-close control of the respective valves in the temperature control apparatus 10.

With the mold heating and cooling system pertaining to the present embodiment 1, the molding cycle is constituted by the processes of waiting, heating, waiting, cooling, and waiting being performed in this order.

When, on the basis of the detection temperature signals from the in-mold temperature sensors TC1 to TC4 in the heating process or cooling process, the temperature determining program in the program storage section 65 determines that the set temperature has been reached, and sends out a determination signal to the control signal generation section 67 for outputting an injection starting signal or mold opening enabling signal to the molding machine (A) 8a and molding machine (B) 8b.

In addition, as shown in Figure 3, when, in the heating process or cooling process, the temperature determining program determines that the set temperature has been reached, a second temperature determining program which is stored in said second temperature determining section 66 is operated, and when the second temperature determining program determines that the second temperature setting has been reached, it sends out a determination signal indicating that the second temperature setting has been reached, to the control signal generation section 67 for extending the heating process or the cooling process for the molding machine (A) 8a and the molding machine (B) 8b.

Instead of using the second temperature determining program, a filling completion signal or cooling completion signal in the molding process may be sent to the control signal generation section 67 for extending the heating process or the cooling process.

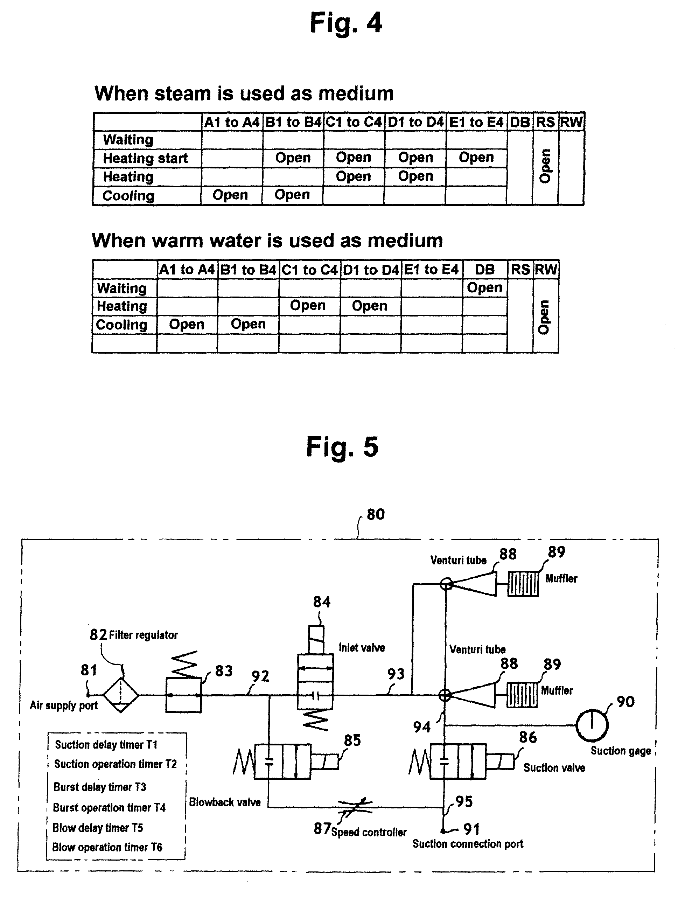

Next, a fundamental aspect of open-close control of the respective valves in the temperature control apparatus 10 by the valve controller 25 of the control means 50 will be described with reference to Figure 4.

### a) When heating medium is steam

First, as shown at top of Figure 4, the steam selector valve RS is opened, and at the start of heating, the outlet medium selector valves B1 to B4, the return medium selector valves C1 to C4, the heating medium selector valves D1 to D4, and the air selector valves E1 to E4 are opened. Then when the return medium temperature sensors TC9 to TC12 detect the set temperature (less than 100 deg C ), the outlet medium selector valves B1 to B4, and the air selector valves E1 to E4 are closed, with the return medium selector valves C1 to C4 and the heating medium selector valves D1 to D4 being kept opened, and the heating process is carried out until an upper limit temperature reaching signal or a heating plus second temperature determining signal, or otherwise, a molding process filling completion signal is inputted.

In the cooling process, only the cooling medium selector valves A1 to A4 and the outlet medium selector valves B 1 to B4 are opened.

### b) When heating medium is warm water

First, as shown at the bottom of Figure 4, the warm selector valve RW is opened, and in the waiting process, only the warm water bypass valve DB is opened, while, in the heating process, the return medium selector valves C1 to C4 and the heating medium selector valves D1 to D4 are opened, and in the cooling process, the cooling medium selector valves A1 to A4, the outlet medium selector valves B1 to B4, and the warm water selector valves RW are opened.

Further, another fundamental aspect will be described below.
a) When heating medium is steam
   When, of the molding machine (A) 8a having the mold 1 and mold 2 and the molding machine (B) 8b having the mold 3 and mold 4, the molding machine (A) 8a is to be heated, steam is supplied from the steam heating unit 30 to the mold 1 and mold 2 through the inlet steam valve VSS, the heating medium line 11, the heating medium accumulator reservoir 38, the heating medium selector valves D1 and D2, and the supply valves VS1 and VS2, and is passed through the mold 1 and mold 2 to heat them.

Further, the steam is passed through the return valves VR1 and VR2, the return medium selector valves C1 and C2, the return medium outlet tube 39, the steam selector valve RS, the Y-type strainer Y2, and the check valve CH2, then being passed through the silent reducer SH with the steam being converted into cooling water, which is returned to the cooling tower 41 through the outlet medium line 15 and the outlet valve VD.

On the other hand, when the molding machine (B) 8b is to be cooled, the cooling water is supplied from the cooling unit 40 to the mold 3 and mold 4 through the V-type strainer Y1, the pump 19, the cooling medium line 12, the pressure gage P1, the cooling water reservoir 51, the cooling medium selector valves A3 and A4, and the supply valve VS3 and VS4 for cooling the mold 3 and mold 4.

Further, the cooling water which has passed through the mold 3 and mold 4 is passed through the return valves VR3 and VR4, the outlet medium selector valves B3 and B4, the cooling water outlet reservoir 52, and the outlet medium line 15, being returned to the cooling tower 41 after being passed through the outlet valve VD. At this time, the return medium selector valves C3 and C4 are closed.

### b) When heating medium is warm water

When, of the molding machine (A) 8a having the mold 1 and mold 2 and the molding machine (B) 8b having the mold 3 and mold 4, the molding machine (A) 8a is to be warmed, warm water is supplied from the warm water heating unit 35 to the mold 1 and mold 2 through the inlet steam valve VSS, the heating medium line 11, the heating medium accumulator reservoir 38, the heating medium selector valves D1 and D2, and the supply valve VS1 and VS2, and is passed through the mold 1 and mold 2 for warming them.

Further, the warm water is passed through the return valves VR1 and VR2, the return medium selector valves C1 and C2, the return medium outlet tube 39, the warm water selector valve RW, and the warm water outlet medium line 70, and is returned to the warm water generation apparatus 36 after being passed through the outlet valve VW. At this time, the steam selector valve RS is closed.

On the other hand, when the molding machine (B) 8b is to be cooled, the cooling water is supplied from the cooling unit 40 to the mold 3 and mold 4 through the Y-type strainer Y1, the pump 19, the cooling medium line 12, the pressure gage P1, the cooling water reservoir 51, the cooling medium selector valves A3 and A4, and the supply valves VS3 and VS4 for cooling the mold 3 and mold 4.

Next, the cooling water which has passed through the mold 3 and mold 4 is passed through the return valves VR3 and VR4, the outlet medium selector valves B3 and B4, the cooling water outlet reservoir 52, and the outlet medium line 15, being returned to the cooling tower 41 after being passed through the outlet valve VD. At this time, the return medium selector valves C3 and C4 are closed.

In this manner, a single temperature control apparatus 10 is placed between two molding machines (the molding machine (A) 8a and the molding machine (B) 8b) such that, with the use of the single temperature control apparatus 10, the two molding machines, i.e., the mold 1 and mold 2 of the molding machine (A) 8a, and the mold 3 and mold 4 of the molding machine (B) 8b can be separately heated, warmed, or cooled, respectively, for carrying out a desired molding operation, even if the molding process for the molding machine (A) 8a and that for the molding machine (B) 8b differ from each other.

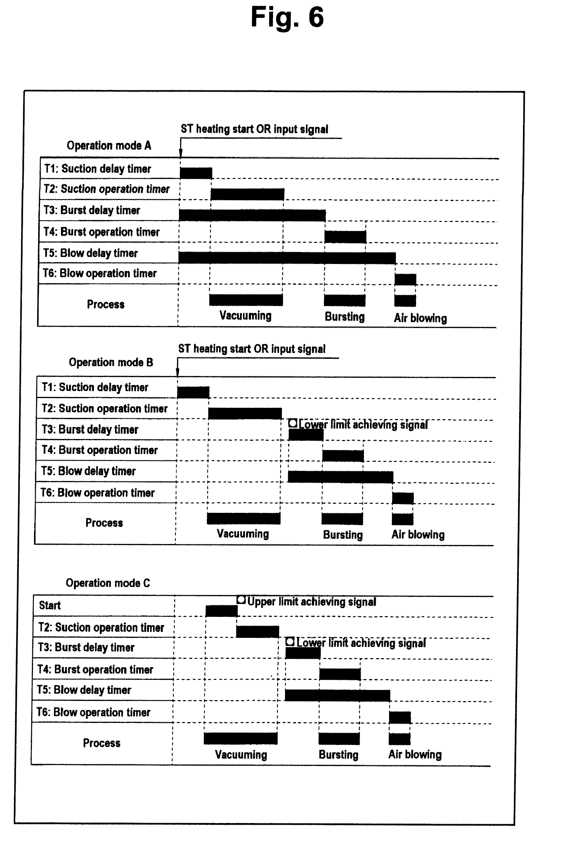

Next, with reference to Figure 5 and Figure 6, a mold vacuum system 80 of two-unit configuration will be described.

As shown in Figure 5, the mold vacuum system 80 includes a suction connection port 91 to be connected to the molds 1 and 2, or the molds 3 and 4, and a suction compression tube 95.

In addition, the mold vacuum system 80 includes an air supply port 81 to which compressed air is supplied from the outside; a filter regulator 82 and a pressure regulating valve 83 which are connected to the air supply port 81 in series; a compressed air tube 92 connected to the pressure regulating valve 83; an inlet valve 84 and a blowback valve 85 which are branch-connected to the outlet side of this compressed air tube 92; a speed controller 87 for flow rate controlling that is connected between this blowback valve 85 and the suction compression tube 95; a suction valve 86 connected to the suction compression tube 95; a compressed air tube 93 connected to the outlet side of the inlet valve 84; a suction tube 94 connected to the suction valve 86; a two-line Venturi tube 88 with a muffler 89 that is commonly connected to the compressed air tube 93 and the suction tube 94; and a suction gage 90 connected to the suction tube 94.

Further, the control for the mold vacuum system 80 is disposed in the control means 50 for the temperature control apparatus 10, including six timers, i.e., a suction delay timer T1, a suction operation timer T2, a burst delay timer T3, a burst operation timer T4, a blow delay timer T5, and a blow operation timer T6.

The mold vacuum system 80 configured as described above has capabilities of sucking in a volume of air equivalent to that of the cavity of the molds 1 and 2, or the molds 3 and 4 to prevent unsatisfactory molding from being caused; returning the inside pressure condition of the molds 1 and 2, or the molds 3 and 4, which have been vacuumed, to the atmospheric pressure one; and further blowing air to clean the vent hole in the molds 1 and 2, or the molds 3 and 4 every molding cycle.

Hereinbelow, the operation of the mold vacuum system 80 will be specifically described.
Vacuuming (suctioning):
When the vacuuming process is to be carried out for the molds 1 and 2, or the molds 3 and 4, the inlet valve 84 is first opened for compressed air to be introduced from the air supply port 81 and passed through the filter regulator 82, the pressure regulating valve 83, the compressed air tube 92, the inlet valve 84, the compressed air tube 93, and the Venturi tube 88 with the muffler 89 for generation of vacuum, whereby the gas and air in the inside of the molds 1 and 2, or the molds 3 and 4 are sucked from the suction connection port 91 to be passed through the suction valve 86 and the Venturi tube 88 before being discharged from the muffler 89 to the open air.

Bursting:
When the bursting process is to be carried out for the molds 1 and 2, or the molds 3 and 4, the blowback valve 85 is opened for the inside of the molds 1 and 2, or the molds 3 and 4 that has been vacuumed, in order to feed in air into the inside of the molds 1 and 2, or the molds 3 and 4 through the speed controller 87, the suction compression tube 95, and the suction connection port 91 for returning the inside pressure condition of the molds 1 and 2, or the molds 3 and 4 from vacuum to the atmospheric pressure condition.

The degree of vacuum in the inside of the molds 1 and 2, or the molds 3 and 4 can be adjusted by pressure setting of the filter regulator 82 connected to the air supply port 81 in the mold vacuum system (MV) 80 (increasing the pressure setting will raise the degree of vacuum, while decreasing the pressure setting will lower the degree of vacuum).

Air blowing:
When the air blowing process is to be carried out for the molds 1 and 2, or the molds 3 and 4, the blowback valve 85 is opened for the molds 1 and 2, or the molds 3 and 4 in order to feed in compressed air into the molds 1 and 2, or the molds 3 and 4 through the speed controller 87, the suction compression tube 95, and the suction connection port 91 for cleaning the vent hole in the molds 1 and 2, or the molds 3 and 4 by blowing air every molding cycle.

Figure 6 illustrates three different operation modes A, B, and C of the mold vacuum system 80 in terms of the above-described vacuuming, bursting, and air blowing.

Operation mode A (at the top in Figure 6)
In this mode, all the vacuuming, bursting, and air blowing processes (consisting of delay and operation periods, respectively) are started from a heating starting signal given by the control means 50 in the temperature control apparatus 10, or an external signal, being carried out with the use of the six timers, i.e., the suction delay timer T1, suction operation timer T2, burst delay timer T3, burst operation timer T4, blow delay timer T5, and blow operation timer T6.

Operation mode B (in the middle of Figure 6)
In this mode, the vacuuming process (consisting of delay and operation periods) is started from a heating starting signal given by the control means 50 in the temperature control apparatus 10, or an external signal, being carried out with the suction delay timer T1 and suction operation timer T2; and the bursting process and the air blowing process (consisting of delay and operation periods, respectively) are started from a lower limit reaching signal generated by the temperature control apparatus 10, being carried out with the burst delay timer T3, burst operation timer T4, blow delay timer T5, and blow operation timer T6.

Operation mode C (at the bottom in Figure 6)
In this mode, the vacuuming process (consisting of only an operation period) is started when a temperature difference setting stored in the control means 50 in the temperature control apparatus 10 is reached, and is continued with the use of the suction operation timer T2. The temperature difference setting is stored in the control means 50 as a difference computed by subtracting the temperature at which the vacuuming process is to be started, from the upper limit temperature.
The bursting process and the air blowing process (consisting of delay and operation periods, respectively) are started from a lower limit reaching signal given by the control means 50, being carried out with the use of the burst delay timer T3, burst operation timer T4, blow delay timer T5, and blow operation timer T6.

The signals for implementing the respective processes of vacuuming, bursting, and air blowing may be issued by a molding machine controller (not shown).

The timing of start of the respective processes is determined on the basis of the MV program stored in the MV program storage section 69 of the control means 50 in the temperature control apparatus 10 or an external signal. In addition, the MV program is configured such that it allows use/unuse of the bursting process to be selected, and use/unuse of the air blowing process to be selected.

Thus, the mold multiple heating and cooling system pertaining to the present embodiment 1 provides an outstanding advantage that a single temperature control apparatus 10 is connected to two molding machines (the molding machine (A) 8a and the molding machine (B) 8b). Even if the molding processes for these two molding machines differ from each other, the respective molds 1 and 2, and molds 3 and 4 can be selectively supplied with the necessary steam, warm water, or cooling water, with the required temperature setting being able to be positively provided.

In addition, the temperature control apparatus 10 is required to be connected with only one steam heating unit 30, warm water heating unit 35, and cooling unit 40, whereby the installation space requirement for the entire system can be substantially saved.

Especially for the heating process for the molding machine (A) 8a and the molding machine (B) 8b, either heating by steam or that by warm water can be appropriately selected. Thus there is provided an advantage that, for example, even if a certain plant is not capable of installing a steam generation apparatus (boiler) (because it is not capable of using a fuel, such as oil or LPG), it can use a warm water generation apparatus (which can be operated only by electricity).

On the other hand, for a plant which is capable of installing only the steam generation apparatus, this mold multiple heating and cooling system can be used with no need for a special alteration being made thereto.

Further, the mold vacuum system 80 of two-unit configuration is used to rapidly suck and discharge the gas and air accumulated in the inside of the respective molds 1 and 2, and molds 3 and 4, whereby gas corrosion, fogging, and short shot can be prevented. At the time of mold opening, the vent hole of the molds 1 and 2, and that of the molds 3 and 4, which are easy to be clogged, are cleaned by blowing air every molding cycle, which allows high-quality molded articles to be obtained.

### Embodiment 2

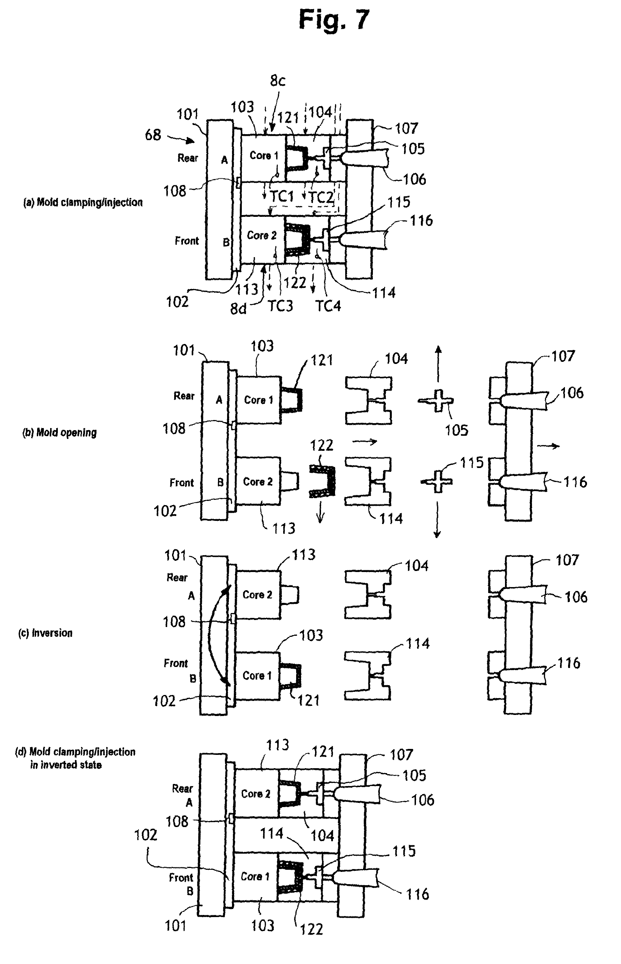

Next, a mold multiple heating and cooling system pertaining to an embodiment 2 of the present invention will be described with reference to Figure 7 to Figure 9.

The mold multiple heating and cooling system pertaining to the present embodiment 2 has basically the same configuration as that of the multiple heating and cooling system of the embodiment 1, however, in place of the molding machine
(A) 8a and molding machine (B) 8b in the embodiment 1, a dual-material molding machine 68 as shown in Figure 7 is used.

As shown in Figure 7, the dual-material molding machine 68 is configured such that, on the rear A side of a movable platen 101 including an inversion table 102, a movable platen side part (1st core) 103 which is connected to said inversion table 102 is disposed, while, for the movable platen side part 103, a cavity side part (1st cavity) 104 and a taken-out runner 105 are disposed. Further, a rear cylinder (primary side plasticizing apparatus) 106 which is supported by a stationary platen 107 is disposed for carrying out molding of a molded article 121.

In addition, the dual-material molding machine 68 is configured such that, on the front B side of the movable platen 101, a movable platen side part (2nd core) 113 which is connected to the inversion table 102 is disposed, while, for the movable platen side part 113, a cavity side part (2nd cavity) 114 and a taken-out runner 115 are disposed. Further, a front cylinder (secondary side plasticizing apparatus) 116 which is supported by the stationary platen 107 is disposed for molding a dual-structure molded article 122.

Assuming that a combination of the movable platen side part (1st core) 103 with the cavity side part (1st cavity) 104 is a mold 8c, and a combination of the movable platen side part (2nd core) 113 with the cavity side part (2nd cavity) 114 is a mold 8d, the following explanation will be given.

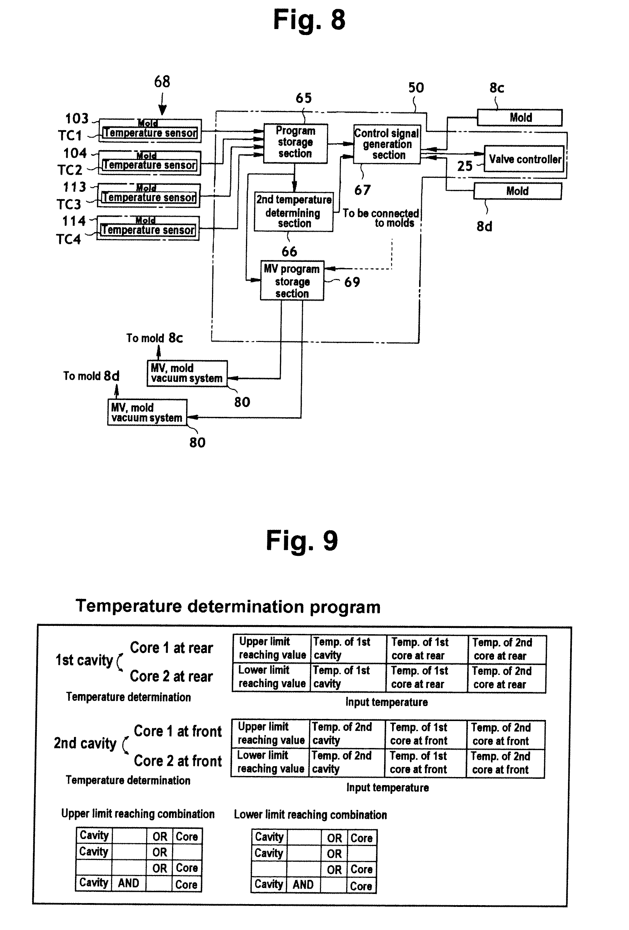

As shown in Figure 8, the temperature control apparatus 10 is connected to the movable platen side part (1st core) 103 and cavity side part (1st cavity) 104, and the movable platen side part (2nd core) 113 and cavity side part (2nd cavity) 114 in the dual-material molding machine 68, as with the molding machine (A) 8a and molding machine (B) 8b as shown in Figure 1.

In addition, the dual-material molding machine 68 has a position sensor 108 for detecting the positions of the movable platen side part (1st core) 103 and the movable platen side part (2nd core) 113, which change their positions with the inversion table 102 being inverted, and outputting a core position signal.

The core position signal is a signal that indicates which of the rear A side and the front B side the movable platen side part (1st core) 103 and the movable platen side part (2nd core) 113 are on, respectively.

Further, the movable platen side part (1st core) 103 and cavity side part (1st cavity) 104, which constitute the mold 8c, and the movable platen side part (2nd core) 113 and cavity side part (2nd cavity) 114, which constitute the mold 8d, include in-mold temperature sensors TC 1 to TC4, respectively, as with the molding machine (A) 8a and molding machine (B) 8b in the embodiment 1.

Next, the molding operation of the mold multiple heating and cooling system pertaining to the embodiment 2 that includes the above-described dual-material molding machine 68 will be described below.
Assuming that, as the initial state, the dual-material molding machine 68 does not have a molded article on the rear A side, but already has a molded article 121 on the front B side, the following explanation will be given.

(a) Mold clamping and injection
   In the mold clamping and injection process, when the movable platen side part (1st core) 103 is required to have a mold temperature of 140 deg C, for example, the 140 deg C is reached before the molding resin being injected from the rear cylinder (primary side plasticizing apparatus) for molding a molded article 121 as shown at top in Figure 7. In addition, the molding resin is injected from the rear cylinder (secondary side plasticizing apparatus) 116 for molding a dual-structure molded article 122 as shown at top in Figure 7.

Because the movable platen side part (2nd core) 113 on the front B side has already a molded article 121, the cooling water will not be caused to flow.

(b) Mold opening
Next, after completion of the mold clamping and injection process, the cooling water is caused to flow through the rear A side and the front B side for cooling them, and after completion of the cooling, the mold opening is performed as shown in the upper middle area in Figure 7 for taking out the molded article 122 from the movable platen side part (2nd core) 113 on the front B side.

(c) Inversion
Next, with the molded article 121 which has been molded being held in the movable platen side part (1st core) 103, the inversion table 102 is inverted as shown in the lower middle portion in Figure 7 to dispose the movable platen side part (1st core) 103 on the front B side, and the movable platen side part (2nd core) 113, from which the molded article 122 having been removed, on the rear A side.

At this time, a core position signal from the position sensor 108 is inputted to the program storage section 65 to be utilized for carrying out the heating process and the cooling process for the mold 8c, 8d in the (d) process of mold clamping and injection in inverted state.

(d) Mold clamping and injection in inverted state
In the inverted state of the inversion table 102, the movable platen side part (1st core) 103 on the front B side has the molded article 121, there being no need for heating. Thus in the heating process, the steam or warm water will not be caused to flow on the front B side.

On the other hand, the movable platen side part (2nd core) 113 which is positioned on the rear A side does not have a molded article, it requires to have a mold temperature of 140 deg C, and thus the steam or warm water is caused to flow through the rear A side for heating it.

After completion of the heating of the movable platen side part (2nd core) 113, the molding resin is injected from the rear cylinder (primary side plasticizing apparatus) 106, as is the case with the (a) mold clamping and injection, for molding a molded article 121 as shown at bottom of Figure 7. In addition, the molding resin is injected from the front cylinder (secondary side plasticizing apparatus) 116 for molding a dual-structure molded article 122 as shown at bottom of Figure 7.

By repeating such a series of processes (a) to (d), the dual-structure molded article 122 is sequentially obtained.

In the above-described molding operation of the mold multiple heating and cooling system pertaining to the embodiment 2, every time the inversion table 102 is inverted, the temperature setting for the movable platen side part (1st core) 103 and that for the movable platen side part (2nd core) 113 are changed over from one to the other, respectively. Thus by the operation of the temperature control apparatus 10, the mold temperature required for dual-material molding is set for each particular position of the inversion table 102, i.e., for the rear A side and the front B side, respectively.

For example, in the (d) process of mold clamping and injection process in inverted state, the movable platen side part (1st core) 103 is not heated. However, in case where, before the injection from the front cylinder (secondary side plasticizing apparatus) 116, the injection cooling water has been caused to flow after the injection in the previous process, resulting in the movable platen side part (1st core) 103 having been cooled to below a desired temperature, the steam or warm water is caused to flow through this movable platen side part (1st core) 103 for heating it.

As the place where the injection cooling water is not caused to flow after the injection from the front cylinder (secondary side plasticizing apparatus) 116, the movable platen side part (2nd core) 113 in said (a) process of mold clamping and injection, and the movable platen side part (1st core) 103 in the (d) process of mold clamping and injection in inverted state can be mentioned.

In the heating process or the cooling process during the molding operation of the mold multiple heating and cooling system pertaining to the present embodiment 2, a detected temperature signal of the in-mold temperature sensors TC1 to TC4 disposed in the mold 8c and mold 8d is inputted to the program storage section 65, and the temperature determining program determines that the set temperature has been reached, sending out a determination signal to the control signal generation section 67, whereby the control signal generation section 67 outputs an injection starting signal or a mold opening enabling signal to the molds 8c and 8d.

In addition, with the second temperature determining section 66, when the temperature determining program determines that the set temperature is reached in the heating process or the cooling process, the second temperature determining program is operated, and when the second temperature determining program determines that the second temperature setting has been reached, it sends out a signal indicating that the second temperature setting has been reached, to the control signal generation section 67 for extending the heating process or the cooling process for the molds 8c and 8d.

The heating process or the cooling process may be extended by sending out a filling completion signal or a cooling completion signal in the molding machine process to the control signal generation section 67 with no use of the second temperature determining program.

In the mold multiple heating and cooling system pertaining to the above-described embodiment 2, the operation of the mold vacuum system 80 of two-unit configuration is the same as that in the embodiment 1.

Figure 9 gives a specific example of combination of the upper limit value and the lower limit value for the temperature of the molds 8c and 8d, thus indicating specific contents of the above-mentioned temperature determining program.

According to the mold multiple heating and cooling system of the present embodiment 2, the same advantages as those of the embodiment 1 can be provided, and in the configuration using the dual-material molding machine 68, the respective temperatures of the molds 8c and 8d that are required for dual-material molding can be exactly set. This allows a high-quality molded article 122 to be obtained, and thus a multiple heating and cooling system using the dual-material molding machine 68 can be established.

In addition, with the temperature control apparatus 10, by carrying out the control which combines the temperature determination by the temperature determining program based on the detection signals from the in-mold temperature sensors TC1 to TC4 and said position sensor 108 with that by the second temperature determining program, injection and filling of the resin can be smoothly performed in molding a molded article 122, such as a lens, or any other thick article. This allows a molded article 122 having a minimum distortion to be obtained, and further in dual-material molding, a high-quality molded product, such as that which has a lens cover as an integral part, to also be molded.

### Industrial Applicability

The present invention is widely applicable to various forming systems using molds including plural molds besides the above-described two-unit molding machine mold and dual-material molding machine mold.

### Reference Signs List

- 1:: Mold
- 2:: Mold
- 3:: Mold
- 4:: Mold
- 8a:: Molding machine (A)
- 8b:: Molding machine (B)
- 8c:: Mold
- 8d:: Mold
- 10:: Temperature control apparatus
- 11:: Heating medium line
- 12:: Cooling medium line
- 13:: Air flow line
- 15:: Outlet medium line
- 19:: Pump
- 22:: Air supply
- 23:: Air filter
- 24:: Air regulator
- 25:: Valve controller
- 26:: Regulating valve
- 29:: Air accumulator reservoir
- 30:: Steam heating unit
- 31:: Water softening apparatus
- 32:: Chemical injection apparatus
- 33:: Boiler
- 34:: Outlet valve
- 35:: Warm water heating unit
- 36:: Warm water generation apparatus
- 37:: Return valve
- 37a:: Outlet valve
- 38:: Heating medium accumulator reservoir
- 39:: Return medium outlet tube
- 40:: Cooling unit
- 41:: Cooling tower
- 42:: Pump
- 50:: Control means
- 51:: Cooling water reservoir
- 52:: Cooling water outlet reservoir
- 65:: Program storage section
- 66:: Second temperature determining section
- 67:: Control signal generation section
- 68:: Dual-material molding machine
- 69:: MV program storage section
- 70:: Warm water outlet medium line
- 72:: Steam return pipe line
- 80:: Mold vacuum system
- 81:: Air supply port
- 82:: Filter regulator
- 83:: Pressure regulating valve
- 84:: Inlet valve
- 85:: Blowback valve
- 86:: Suction valve
- 87:: Speed controller
- 88:: Venturi tube
- 89:: Muffler
- 90:: Suction gage
- 91:: Suction connection port
- 92:: Compressed air tube
- 93:: Compressed air tube
- 94:: Suction tube
- 95:: Suction compression tube
- 101:: Movable platen
- 102:: Inversion table
- 103:: Movable platen side part
- 104:: Cavity side part
- 105:: Taken-out runner
- 106:: Rear cylinder
- 107:: Stationary platen
- 108:: Position sensor
- 113:: Movable platen side part
- 114:: Cavity side part
- 115:: Taken-out runner
- 116:: Front cylinder
- 121:: Molded article
- 122:: Molded article
- 131 to 134:: supply side pipe line
- 135 to 138:: Return side pipe line
- A1 to A4:: Cooling medium selector valve, each
- APS:: Air pressure switch
- B1 to B4:: Outlet medium selector valve, each
- C1 to C4:: Return medium selector valve, each
- CH2 to CH8:: Check valve, each
- D1 to D4:: Heating medium selector valve, each
- DB:: Warm water bypass valve
- E1 to E4:: Air selector valve, each
- P1:: Pressure gage
- Q:: Branch section
- RS:: Steam selector valve
- RW:: Warm water selector valve
- SH:: Silent reducer
- T1:: Suction delay timer
- T2:: Suction operation timer
- T3:: Burst delay timer
- T4:: Burst operation timer
- T5:: Blow delay timer
- T6:: Blow operation timer
- TC 1 to TC4:: In-mold temperature sensor, each
- TC5 to TC8:: Supply medium temperature sensor, each
- TC9 to TC12:: Return medium temperature sensor, each
- TC13:: Cooling medium temperature sensor
- TC 14:: Heating medium temperature sensor
- TC 15:: Return medium temperature sensor
- VD:: Outlet valve
- VE1 to VE4:: Air supply valve, each
- VR1 to VR4:: Return valve, each
- VS1 to VS4:: Supply valve, each
- VSS:: Inlet steam valve
- VW:: Outlet valve
- WPS:: Water pressure switch
- Y1:: Y-type strainer
- Y2:: Y-type strainer

## Claims

1. A mold multiple heating and cooling system which selectively supplies steam or warm water, or cooling water to respective molds (1 to 4) of a plurality of molding machines (8a,8b) that include an in-mold temperature sensor, respectively, and repeats a cycle consisting of heating the respective molds (1 to 4), molding a molded article for each of the plurality of molding machines (8a,8b), and cooling the respective molds, said system comprising:
a steam heating unit (30) which generates steam;
a warm water heating unit (35) which generates warm water;
a cooling unit (40) which supplies and circulates cooling water;
a single temperature control apparatus (10) which is disposed between said steam heating unit (30), warm water heating unit (35) and cooling unit (40) and the respective molds (1 to 4) of the plurality of molding machines (8a,8b), being connected by piping therebetween, which selectively supplies steam or warm water, or cooling water to said respective molds (8a,8b), and which includes a pipe line system capable of discharging from the respective molds; and
control means (50) which, on the basis of a temperature detected by each in-mold temperature sensor disposed in said respective molds (1 to 4), determines the temperature of the respective molds (1 to 4) on a previously stored temperature determination program for controlling selective supply and discharge of steam or warm water, or cooling water to/from the respective molds (1 to 4) of the plurality of molding machines (8a,8b) according to a molding cycle for each molded article therefor.

2. A mold multiple heating and cooling system as claimed in claim 1, wherein said pipe line system which is capable of discharging from the respective molds, comprises pipes, valves, and the like;
and said system includes an in-mold cleaning apparatus which, under the control of said control means (50), sucks and discharges the gas and air from said respective molds (1 to 4), and blows air for cleaning the inside of the respective molds (1 to 4).

3. A mold multiple heating and cooling system as claimed in claim 1 or 2, wherein said respective molds (1 to 4) of a plurality of molding machines (8a,8b) comprises a total of four molds of two molding machines.

4. A mold multiple heating and cooling system which selectively supplies steam or warm water, or cooling water to two sets of molds of a mold-inversion type dual-material molding machine (68) that include an in-mold temperature sensor, respectively, and repeats a cycle consisting of heating the two sets of molds, molding a molded article for each of the two sets of molds, and cooling the two sets of molds, comprising:
a steam heating unit (30) which generates steam;
a warm water heating unit (35) which generates warm water;
a cooling unit (40) which supplies and circulates cooling water;
a position sensor (108) for detecting an inverted position of an inversion table in the two sets of molds of said dual-material molding machine (68),
a single temperature control apparatus (10) which is disposed between said steam heating unit (30), warm water heating unit (35) and cooling unit (40) and the two sets of molds of the dual-material molding machine (68), being connected by a piping therebetween, which selectively supplies steam or warm water, or cooling water to said two sets of molds, and which includes a pipe line system capable of discharging from the two sets of molds;
control means (50) which, on the basis of a temperature detected by each in-mold temperature sensor disposed in said two sets of molds and a detection signal of said position sensor (108), determines the temperature of the two sets of molds on a previously stored temperature determination program for controlling selective supply and discharge of steam or warm water, or cooling water to/from the two sets of molds of the dual-material molding machine (68) according to a molding cycle for each molded article therefor.

5. A mold multiple heating and cooling system as claimed in claim 4, including an in-mold cleaning apparatus connected to said temperature control apparatus (10) that, under the control of said control means (50), sucks and discharges the gas and air from said two sets of molds, and blows air for cleaning the inside of the two sets of molds.
